# EUROPÄISCHE PATENTANMELDUNG

(11) **EP 2 088 660 A2**
(43) Veröffentlichungstag der Anmeldung: **12.08.2009**
(21) Anmeldenummer: 08172029.4
(22) Anmeldetag: 17.12.2008
(51) Int. Cl.: H02J 3/18

(54) **Verfahren und Schaltungsanordnung zur Optimierung des Energieverbrauchs eines Verbrauchers an einem Wechselstromnetz**

(30) Priorität: 17.12.2007 DE 202007000054 U
(71) Anmelder: PCP Powercost Protector Company, Ltd., Coventry, West Midlands (GB)
(72) Erfinder: Hegerding, Harry, 76316 Malsch (DE)
(74) Vertreter: Stoffregen, Hans-Herbert

(57) **Zusammenfassung**

Verfahren und Schaltungsanordnung zur Verbrauchskostenoptimierung im Niederspannungs-Wechselstromnetz. Um die von Verbrauchsmessern in Kilowattstunden gemessene elektrische Arbeit im lokalen Wechselstromnetz eines Stromkunden reduziert und damit einhergehend eine klimarelevante Reduktion des realen Energieverbrauchs von mit der Schaltungsanordnung verbundenen elektrischen Verbrauchern zu erreichen, ist vorgesehen, dass ein Verbraucher (V) in Reihenschaltung mit einer kapazitiven Stromquelle (PCP) mit addativem Innenwiderstand an einem Wechselstromnetz (WSN) betrieben wird, wobei ein Leistungsfaktor λ der dadurch entstehenden Reihenschaltung durch einen Leistungsfaktorregler (PFC) derart eingestellt wird, dass die aus dem Wechselstromnetz (WSN) entnommene Wirkleistung minimiert wird. Die Schaltungsanordnung (PCP) ist als kapazitive Stromquelle mit adaptivem Innenwiderstand ausgebildet, welche in Reihenschaltung mit dem Verbraucher (V) an dem Wechselstromnetz (WSN) angeschlossen ist und einen Reihenresonanzkreis bildet.

## Beschreibung

Die Erfindung bezieht sich auf ein Verfahren und eine Schaltungsanordnung zur Optimierung des Energieverbrauchs eines Verbrauchers an einem Wechselstromnetz.

Durch das profitmaximierende Verhalten der Energieversorgungsunternehmen, insbesondere der Erzeuger von elektrischem Strom, sowie weiterer von den Verbrauchern nicht zu beeinflussender Faktoren steigt der Strompreis für die Kunden der Konzerne ständig an und die Umwelt wird zunehmend belastet.

Eine Schaltungsanordnung zur Steuerung der Amplitude und des Phasenwinkels zwischen Spannung und Strom einer elektrischen Energieversorgung einer induktiven Last ist in in der GB-A-1 358 666 beschrieben. Dabei ist ein Eingang angepasst, um an eine Spannungsversorgung mit wechselndem elektrischem Potenzial angeschlossen zu werden. Ein Ausgang ist vorgesehen, an dem die induktive Last angeschlossen ist. Eine Vielzahl von parallel geschalteten Zweigen zwischen Eingang und Ausgang ist vorgesehen, wobei jeder Zweig eine Reihenschaltung aus antiparallel geschalteten Thyristoren, einer Induktivität sowie einer Kapazität umfasst. Ferner sind Mittel zur Ansteuerung jedes Thyristors für jede Halbwelle der Wechselspannung vorgesehen.

In der EP-B-0 439 953 ist eine Vorrichtung zum Regeln des Blindwiderstandes einer Übertragungsleitung beschrieben, in die zur Kompensation des induktiven Blindwiderstandes bis zu einem vorbestimmten Kompensationsgrad, bei dem der Blindwiderstand abgesenkt wird, in Reihe ein kapazitiver Blindwiderstand eingefügt ist.
Davon ausgehend liegt der vorliegenden Erfindung die Aufgabe zu Grunde, eine Schaltungsanordnung der eingangs genannten Art dahingehend weiterzubilden, dass die von Verbrauchsmessern in Kilowattstunden gemessene elektrische Arbeit im lokalen Wechselstromnetz eines Stromkunden reduziert wird. Damit einhergehend ist eine klimarelevante Reduktion des realen Energieverbrauchs von mit der Schaltungsanordnung verbundenen elektrischen Verbrauchern angestrebt.

Die Aufgabe wird u. a. erfindungsgemäß dadurch gelöst, dass die Schaltungsanordnung als kapazitive Stromquelle mit adaptivem Innenwiderstand ausgebildet ist, welche in Reihenschaltung mit dem Verbraucher zur Bildung eines Reihenresonanzkreises an dem Wechselstromnetz angeschlossen ist. Die Schaltungsanordnung stellt prinzipiell eine kapazitive Stromquelle mit adaptivem Innenwiderstand dar, welche an einer konstanten Spannungsquelle, nämlich dem niederohmigen Versorgungsnetz, betrieben wird. Im Zusammenwirken mit der - überwiegend resistiven - Last am Ausgang entsteht so ein komplexer Spannungsteiler mit zwischen Spannungsanpassung und Leistungsanpassung gleitender Impedanz.

Die Schaltungsanordnung wird vor dem internen Verbrauchsnetz eines Nutzers installiert, wodurch die Kosten für die geleistete elektrische Arbeit um bis zu 41 % gesenkt werden können. Durch die Reduktion des realen Verbrauchs um mindestens 25 % im Jahresmittel wird ein Beitrag zur Verbesserung der Energiebilanz bei Erzeugung und Verteilung von elektrischer Energie unter Klimaschutzgesichtspunkten geleistet. Die Funktionalität der Schaltungsanordnung beruht auf einem tripodischen System elektrophysikalischer Effekte, kombiniert mit mathematisch/logischen Algorithmen zur Analyse, Überwachung und Steuerung. Abweichend von der allgemeinen Lehrmeinung wird das Versorgungsnetz unter Gesichtspunkten der Informationsübermittlung und - verarbeitung betrachtet. Die Schaltungsanordnung ist ein autonomes System mit eigener Intelligenz, welches als "Torwächter" an einer Schnittstelle zwischen dem Versorgungsnetz (äußeren Netz der Energieversorgungsunternehmen) und dem internen Netz des Nutzers sowohl den Informationsfluss als auch den Energiefluss zensiert und kanalisiert. Die Schaltungsanordnung trennt die galvanische Verbindung der Außenleiter zwischen dem internen Netz des Nutzers und dem äußeren Netz des Versorgers. Die Energieübertragung zur Verbraucherseite erfolgt durch kapazitive Kopplung.

Bevorzugt ist die kapazitive Stromquelle in Form einer gesteuerten Kapazitätskaskade ausgeführt, welche in Verbindung mit dem Verbraucher (Last) einen komplexen Spannungsteiler (zwischen Spannungsanpassung und Leistungsanpassung) die gleitende Impedanz bildet. Die Ausgangsspannung variiert innerhalb eines Toleranzbandes nach DIN-IEC 60038 zwischen 207 V ≤ UA ≤ 242 V [RMS], und wird - mittels einer digitalen Regelung der Schaltungsanordnung ständig an der unteren Bandgrenze gehalten. Die obere Grenze wird von der Spannungsfestigkeit des Wechselstromnetzes und der momentanen Netzlast bestimmt. Da die DIN-IEC 60038 die Spannungsfestigkeit des Versorgungsnetzes für die Energieversorgungsunternehmen (EVU's) bindend vorschreibt, sind auch die Hersteller elektrotechnischer Produkte gehalten, diese so auszulegen, dass eine einwandfreie Funktion auch an den Bandgrenzen gewährleistet ist. Durch die Absenkung der Versorgungsspannung sinkt, bei gegebener Last, auch der Stromfluss und somit auch die Wirkleistung als Basis für die Messung der elektrischen Arbeit.

In einer bevorzugten Ausführungsform umfasst die kapazitive Stromquelle eine Kondensatorkaskade, mit einer mit dem Verbraucher in Reihe liegenden Grundkapazität sowie zumindest einer Stützkapazität, welche mittels eines Schaltelementes parallel zu der Grundkapazität schaltbar ist sowie einen Leistungsfaktorregler, welcher zur Erfassung einer Netzspannung UNETZ mit zumindest einer Netzphase L1, L2, L3 und zur Erfassung zumindest einer Ausgangsspannung UAL1, UAL2, UAL3 mit zumindest einer Ausgangsphase L1, L2, L3 verbunden ist, wobei die Ausgangsspannungen gemessen und gespeichert werden und daraus Phasenspitzenströme abgeleitet werden, wobei die gemessenen und berechneten Werte zur Laufzeit durch den Vergleich mit vorgegebenen Systemparametern analysiert werden und wobei Steuersignale für das zumindest eine Schaltelement zur optimalen Regelung des Leistungsfaktors erzeugt werden.

Die serielle kapazitive Kopplung bewirkt darüberhinaus eine Verringerung des Leistungsfaktors (λ = cosϕ) auf Werte λ < 1, auch bei rein ohm'schen Lasten und mit nur minimaler Blindleistungspendelung durch das Versorgungsnetz.

Da an einem elektrischen Kondensator der Stromfluss der Spannung um 90° vorauseilt, ergibt sich auch für eine kapazitiv angekoppelte ohmsche Last im Wechselstromkreis ein lastabhängiger Winkel zwischen Strom und Spannungsvektor. Dieser Phasenwinkel definiert bei technischem Wechselstrom den Leistungsfaktor λ als cos des Verschiebungswinkels ϕ. Für den Effektivwert der Leistung im Verbrauchsnetz hinter der Schaltungsanordnung, der gemessenen Wirkleistung, gilt demgemäß die Formel Pw = U • I •
cos ϕ². Die z. B. von Ferrais-Messwerken in kWh gemessene elektrische Arbeit ist allgemein definiert als W = ∫P(t) • Δt. Mit der Wirkleistung P_{W} als Produkt aus Spannung, Strom und Leistungsfaktor im Integranden ergibt sich für W nun eine direkte zeitliche Abhängigkeit vom quadratischen Leistungsfaktor, welcher von den rechnergesteuerten Kondensatorkaskaden der Schaltungsanordnung, lastabhängig pulsierend, verändert wird.

In einer komplexen Netzumgebung finden sich neben rein resistiven Lasten wie Heizgeräten und Leuchtmitteln ohne Vorschaltgeräte auch solche mit überwiegend induktivem Charakter wie Drosselspulen, Transformatoren, Elektromotore sowie nichtlineare Lasten wie Gleichrichter mit Siebkondensatoren, Schaltnetzteilen usw., welche einen pulsförmigen Stromverlauf im Netz bewirken und so maßgeblich zum Entstehen von Oberschwingungsstrom beitragen.

Bei der Reihenschaltung reaktiver Lasten mit der Kondensatorkaskade der Schaltungsanordnung entsteht ein Serienresonanzkreis, welcher in Abhängigkeit von den enthaltenen Induktivitäten seine Resonanzfrequenz nahe der Netzfrequenz haben kann. Dies führt einerseits zu einem Spannungsanstieg, durch den die angeschlossenen Verbrauchsgeräte beschädigt werden können, wenn nicht entsprechende Gegenmaßnahmen getroffen werden. Andererseits lässt diese Induktionsspannung jedoch auch Strom durch die parallel betriebenen Verbraucher und zurück ins Netz fließen, was zu einer nicht unerheblichen Senkung des gemessenen Verbrauchs führt.

Der durch die Induktionsspannung getriebene "Blindstrom" pendelt, ohne nutzbare Arbeit zu leisten, durch das ganze Netz bis zum Erzeuger und belastet Leitungen und sonstige Komponenten. Der Blindstrom muss in der Regel aufwendig kompensiert oder gemessen und zusätzlich gezahlt werden. Bei der erfindungsgemäßen Schaltungsanordnung wird die im Blindstrom enthaltende Energie gespeichert und dem Verbraucher als Wirkleistung zur Verfügung gestellt.

Das Vorstehende gilt sinngemäß auch für das sogenannte "Oberschwingungsspektrum", welches durch nichtlineare Verbraucher, wie es z. B. Netzgleichrichter mit Siebkondensatoren, Schaltnetzteile in elektronischen Geräten oder mit Phasenanschnittstellern gesteuerte Maschinen oder Leuchtmittel sind, erzeugt wird. Die erfindungsgemäße Schaltungsanordnung macht die Energie im bandbegrenzten Spektrum zwischen der Netzfrequenz von 50 Hz und ihrer achten ungeradzahligen Harmonischen bei 950 Hz der sogenannten "Nyquist-Frequenz" nutzbar.

Akquisition, Analyse und Aktion sind die drei Basisalgorithmen des mikrocomputergesteuerten Leistungsfaktorreglers, welcher das "Gehirn" der Schaltungsanordnung darstellt. Als Variablen werden die ausgangsseitigen Spannungsabfälle beispielsweise auf den Netzphasen zwischen Kondensatorkaskade und Verbraucher gemessen, gespeichert und daraus Phasenspitzenströme abgeleitet. Die Werte werden zur Laufzeit durch den Vergleich mit fest abgespeicherten Systemparametern analysiert. In einer nachfolgenden Aktionsphase werden logische Entscheidungen getroffen und die Kondensatorkaskaden über die elektronischen Lastschalter für einen optimalen Betrieb eingestellt.

Ein kompletter Programmzyklus läuft vorzugsweise innerhalb einer Latenzzeit von ca. 440 µs ab. Da die aktive Taktzeit für die elektronischen Lastschalter programmintern auf 80 µs eingestellt ist, ergibt sich somit ein Taktfluss von 520 µs respektive einer Taktfrequenz von 1920 Hz. Dies bedeutet, dass die Netzphasen L1, L2, L3 jeweils 640 mal pro Sekunde auf Veränderungen untersucht werden. Externe Hystereseschaltungen verhindern das Auftreten von Regelschwingungen.

Gemäß einer besonders bevorzugten Ausführungsform weist die Schaltungsanordnung eine Fehlerschutzschaltung auf, umfassend eine Bypass-Schaltung zur automatischen Überbrückung der Kondensatorkaskade im Falle einer Störung des Leistungsfaktorreglers. Dadurch wird eine unterbrechungsfreie Stromversorgung der Verbraucher für den Fall einer Störung des Leistungsfaktorreglers in Folge innerer oder äußerer Einflüsse sichergestellt. Durch die Bypass-Schaltung erfolgt eine automatische Umgehung des Leistungsteils der Schaltungsanordnung bis zur Beseitigung der Störung.

Des Weiteren umfasst die Fehlerschutzschaltung eine Messschaltung zur kontinuierlichen Überwachung der ausgangsseitigen Phasenspannungen zur Erkennung von schädlichen Induktionsspannungen und Begrenzung der Ausgangsspannung auf einen konstanten Maximalwert wie UAMAX = 245 V[RMS], indem der Bypass für einen fest vorgegebenen Zeitraum aktiviert und Überspannungen abgeleitet werden.

Da die Leistungsbandbreite des Leistungsfaktorreglers von der Kapazität der Kondensatoren in der Kondensatorkaskade abhängt und diese fertigungstechnischen Beschränkungen unterworfen sind, wird bei Erreichen der unteren Bandgrenze, d. h. maximal zulässiger Strom, der Bypass durch den Überstrom aktiviert und so die abgesicherte Anschlussleistung der Gesamtinstallation gänzlich ausgenutzt.

Gemäß einer bevorzugten Ausführungsform besteht die Schaltungsanordnung im Wesentlichen aus vier Basiskomponenten, nämlich einem microcomputerbasierten Leistungsfaktorregler inklusive einem speicherresidenten Betriebssystem und einer Controller-Software, vorzugsweise drei Kapazitätskaskaden mit jeweils zumindest vier hochkapazitiven und schaltfesten Kondensatoren wie MKM-Becherkondensatoren, vorzugsweise drei kontaktlosen Hochgeschwindigkeits-Kaskadenschaltern sowie einem kontaktlosen Hochgeschwindigkeitsbrückenschalter.

Des Weiteren bezieht sich die Erfindung auch auf ein Verfahren zur Verbrauchskostenoptimierung im Niederspannungs- Wechselstromnetz. Das Verfahren zeichnet sich dadurch aus, dass ein Verbraucher in Reihenschaltung mit einer kapazitiven Stromquelle mit adaptivem Innenwiderstand an ein Wechselstromnetz angeschlossen wird, wobei ein Leistungsfaktor λ der dadurch entstehenden Reihenschaltung durch einen Leistungsfaktorregler derart eingestellt wird, dass die aus dem Wechselstromnetz entnommene Wirkleistung minimiert ist.

Gemäß einer bevorzugten Verfahrensweise wird eine Kapazität der kapazitiven Stromquelle dadurch variiert, dass zu einer mit dem Verbraucher in Reihe liegenden Grundkapazität über elektronische Leistungsschalter Stützkapazitäten parallel geschaltet werden. Die Ansteuerung der Stützkapazitäten erfolgt dabei über den Leistungsfaktorregler.

Eine weitere bevorzugte Verfahrensweise zeichnet sich dadurch aus, dass der Leistungsfaktorregler Spannungsabfälle auf den ausgangsseitigen Netzphasen erfasst, speichert und aus diesen Messwerten Spitzenströme errechnet. Diese Werte werden zur Laufzeit durch den Vergleich mit fest abgespeicherten Systemparametern analysiert.

Anschließend werden logische Entscheidungen getroffen und die Kondensatorkaskaden über die elektronischen Lastschalter für einen optimalen Betrieb eingestellt.

Vorzugsweise läuft ein kompletter Programmzyklus innerhalb einer Latenzzeit von ca. 440 µs ab. Da die aktive Taktzeit für die elektronischen Lastschalter programmintern auf 80 µs eingestellt ist, ergibt sich somit ein Taktzyklus von 620 µs respektive einer Taktfrequenz von 1920 Hz. Dies bedeutet, dass die Netzphasen L1 L2, L3 jeweils 640 x pro Sekunde auf Veränderungen untersucht werden.

Vorzugsweise wird für den Fall einer Störung des Leistungsfaktorreglers in Folge innerer oder äußerer Einflüsse eine unterbrechungsfreie Stromversorgung der Verbraucher sichergestellt. Für diesen Fall wird ein Relais mit Lastschaltern zur Überbrückung der Kondensatorkaskade zur direkten Durchschaltung des Wechselspannungsnetzes an den Verbraucher angesteuert. Die automatische Umgehung des Leistungsteils der Schaltungsanordnung erfolgt bis zur Beseitigung der Störung.

Eine weitere bevorzugte Verfahrensweise zeichnet sich dadurch aus, dass schädliche Induktionsspannungen durch kontinuierliche Überwachung der ausgangsseitigen Phasenspannungen erkannt werden und dass im Fall von schädlichen Induktionsspannungen die Phasenspannungen auf einen Maximalwert von 245 V[RMS] geklemmt bzw. begrenzt werden. Hierzu wird oberhalb der Sollspannung der Bypass für einen fest vorgegebenen Zeitraum aktiviert und die Überspannung abgeleitet.

Eine besonders bevorzugte Verfahrensweise zeichnet sich dadurch aus, dass die Impedanz, als Innenwiderstand der virtuellen Stromquelle, durch einen Grundlastkondensator und dazu parallel geschaltete Phasenschieberkondensatoren, lastabhängig verändert wird und so für das Versorgungsnetz als konstante Spannungsquelle, eine komplexwertige Last mit einem Phasenwinkel zwischen Strom und Spannung bildet.

Dabei ist vorgesehen, dass die Kondensatoren mit schnellen, autokommutierenden Halbleiterschaltern mit optischer Potenzialtrennung zwischen Steuer- und Leistungskreis zu - und abgeschaltet werden.

Dabei werden zwei Leistungsthyristoren über zwei Kommutierungsdioden und einen optisch isolierten Triac in einem stimulierten Gegentakt-Antiparallelbetrieb als Vollwellenschalter ohne Verlustwinkel betrieben.

Alternativ können vorzugsweise zwei antiparallel geschaltete Thyristoren über vorzugsweise zwei Kommutierungsdioden und einen optisch isolierten Triac mit jeweils einer positiven Halbwelle des Phasenstroms so gezündet werden, dass kein Verlustwinkel an der Netzperiode entsteht.

Ferner ist vorgesehen, dass die Ansteuerung des Opto-Triac durch einen Microcontroller im Pulsphasen-Modus mit einer Taktfrequenz von in etwa 2000 Hz und einem Rechteckverhältnis von 17 % erfolgt.

Vorzugsweise wird der lastabhängige Spannungsabfall an den Kapazitätskaskaden mit einer elektronischen Schaltung gemessen, digitalisiert und binär in Echtzeit verarbeitet. Dabei nimmt der Microprozessor eine Bewertung der Messergebnisse nach abgespeicherten Sollwerten vor und führt selbsttätig logische Entscheidungen zur Leistungsanpassung der Kaskaden aus.

Dabei erfolgt die Leistungsanpassung nach einem Schaltmuster 2^{0...3} über acht Stufen, wobei die Kapazitätssteigerung einen linearen Verlauf aufweist.

Das Schaltmuster kann den Kaskadenschaltern als Pulsphasenmodulation zugeführt werden.

Vorzugsweise nimmt der Microcontroller zu Beginn eines jeden Abtastzyklus eine Überprüfung der Potenziale an den Grundlastkondensatoren auf Einhaltung der oberen Toleranzbandgrenze vor, wobei bei Überschreitungen, innerhalb einer Netzperiode, die elektronischen Leistungsschalter zur Überbrückung der Kapazitätskaskaden aktiviert werden. Eine Überspannung durch Resonanzerscheinungen zwischen reaktiven Lasten und den in Serie liegenden Kaskadenkondensatoren wird so in das niederohmige Versorgungsnetz abgeleitet. Innerhalb der Bandgrenzen wird die Energie dem Verbraucher zur Verfügung gestellt.

Eine weitere Verfahrensweise zeichnet sich dadurch aus, dass bei einem eventuellen Ausfall des Microcontrollers der Brückenschalter (ELS 3-50B) selbsttätig aktiviert wird (FSC) und so den unterbrechungsfreien Betrieb, im inneren Netz des Nutzers der Schaltungsanordnung PCP aufrechterhält.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von den Zeichnungen zu entnehmenden bevorzugten Ausführungsbeispielen.

### Es zeigen:

- Fig. 1: ein schematisches Blockschaltbild der Schaltungsanordnung als kapazitive Stromquelle mit adaptivem Innenwiderstand zwischen Wechselspannungsnetz und Verbraucher,
- Fig. 2: eine schematische Darstellung einer ersten Ausführungsform eines Leistungsteils der Schaltungsanordnung mit Leistungsfaktorregler und Fehlerschutzschaltung,

- Fig. 3: ein schematisches Blockschaltbild des Leistungsfaktorreglers,
- Fig. 4: ein schematisches Blockschaltbild der Fehlerschutzschaltung,
- Fig. 5: eine schematische Darstellung einer zweiten Ausführungsform eines Leistungsteils der Schaltungsanordnung,
- Fig. 6: einen Leistungsfaktorregler für das Leistungsteil nach Fig. 5 und
- Fig. 7: eine schematische Darstellung eines elektronischen Leistungsschalters für die Leistungsteile nach Fig. 2 und 5.

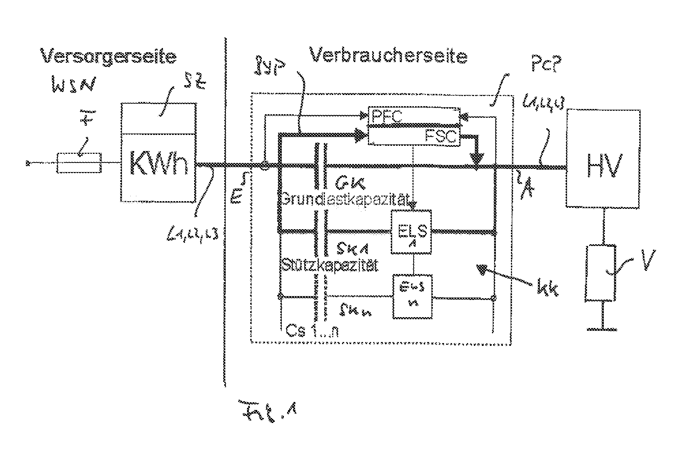

Fig. 1 zeigt ein Blockschaltbild einer Schaltungsanordnung PCP zur Optimierung des Energieverbrauchs eines ein- oder dreiphasigen Verbrauchers V an einem ein- oder dreiphasigen Wechselstromnetz WSN.

Die Schaltungsanordnung PCP weist einen Eingang E auf, der mit einem Ausgang eines Stromzähler SZ wie Drehstromzählers verbunden ist, der seinerseits über eine Sicherung F mit dem Wechselstromnetz WSN verbunden ist. Ferner weist die Schaltungsanordnung PCP einen Ausgang A auf, an dem der Verbraucher V über eine Hauptverteilung HV angeschlossen ist.

Die Schaltungsanordnung PCP umfasst eine Kondensatorkaskade KK, die in Reihe mit dem Verbraucher V an dem Wechselspannungsnetz WSN liegt. Die Kondensatorkaskade KK umfasst eine Grundlastkapazität GK sowie Stützkapazitäten SK1...SKn, die über elektronische Leistungsschalter ELS 1 ... ELSn parallel zu der Grundlastkapazität GK schaltbar sind. Zur Ansteuerung der elektronischen Leistungsschalter ELS 1 ... ELSn ist ein Leistungsfaktorregler PFC vorgesehen. Der Leistungsfaktorregler PFC ist zur Erfassung der Netzspannung UNETZ mit zumindest einer Eingangsnetzphase L1, L2, L3 verbunden und zur Erfassung von Ausgangsspannungen UAL1, UAL2, UAL3 mit jeweils einer der zu einem Verbraucher V führenden Netzphasen L1, L2, L3.

Die Schaltungsanordnung PCP stellt prinzipiell eine kapazitive Stromquelle mit adaptivem Innenwiderstand dar, welche an dem als Konstantstromquelle anzusehenden Wechselspannungsnetz WSN betrieben wird. Im Zusammenwirken mit dem eine überwiegend resistive Last darstellenden Verbraucher V am Ausgang entsteht so ein komplexer Spannungsteiler mit zwischen Spannungsanpassung und Leistungsanpassung gleitender Impedanz. Die Ausgangsspannung UA kann im Bereich zwischen 200 V ≤UA ≤ 241 V [RMS] variieren, wobei die obere Grenze von der Spannungsfestigkeit des Wechselstromnetzes WSN und der momentanen Netzlast sowie bestimmt wird.

Die serielle kapazitive Kopplung bewirkt darüberhinaus eine Verringerung des Leistungsfaktors (λ = cosϕ) auf Werte λ < 1, auch bei rein ohm'schen Lasten und mit nur minimaler Blindleistungspendelung durch das Versorgungsnetz.

Da an einem elektrischen Kondensator der Stromfluss der Spannung um 90° vorauseilt, ergibt sich auch für eine kapazitiv angekoppelte ohmsche Last im Wechselstromkreis ein lastabhängiger Winkel zwischen Strom und Spannungsvektor. Dieser Phasenwinkel definiert bei technischem Wechselstrom den Leistungsfaktor λ als cos des Verschiebungswinkels ϕ. Für den Effektivwert der Leistung im Verbrauchsnetz hinter der Schaltungsanordnung, der gemessenen Wirkleistung, gilt demgemäß die Formel P_{W} = U • I •
cos ϕ². Die z. B. von Ferrais-Messwerken in kWh gemessene elektrische Arbeit ist allgemein definiert als W = ∫P(t) • Δt. Mit der Wirkleistung P_{W} als Produkt aus Spannung, Strom und Leistungsfaktor im Integranden ergibt sich für W nun eine direkte zeitliche Abhängigkeit vom quadratischen Leistungsfaktor, welcher von den rechnergesteuerten Kondensatorkaskaden der Schaltungsanordnung, lastabhängig pulsierend, verändert wird.

In einer komplexen Netzumgebung finden sich neben rein resistiven Lasten wie Heizgeräte und Leuchtmitteln ohne Vorschaltgerät auch solche mit überwiegend induktivem Charakter wie Drosselspulen, Transformatoren, Elektromotore sowie nicht lineare Lasten wie Gleichrichter mit Siebkondensatoren, Schaltnetzteile, welche einen pulsförmigen Stromverlauf im Netz bewirken und so maßgeblich zur Entstehung von Oberschwingungsstrom beitragen.

Bei der Reihenschaltung reaktiver Lasten als Verbraucher V mit der Kondensatorkaskade KK entsteht ein Serienresonanzkreis, welcher in Abhängigkeit von den enthaltenen Induktivitäten seine Resonanzfrequenz nahe der Netzfrequenz haben kann. Dies führt einerseits zu einem Anstieg der Ausgangsspannung UA, welche die angeschlossenen Verbraucher V beschädigen würde, wenn nicht entsprechende Gegenmaßnahmen getroffen würden. Andererseits lässt diese Induktionsspannung jedoch auch Strom durch die parallel betriebenen Verbraucher V und zurück ins Netz fließen, was zu einer nicht unerheblichen Senkung des gemessenen Verbrauchs führt. In einem verbraucherseitigen Teilnetz sind in der Regel resistive und reaktive Verbraucher parallel an einen (oder mehrere) Außenleiter und den Neutralleiter geschaltet. Wenn diese Verbraucher gleichzeitig in Betrieb sind, treibt die Gegeninduktionsspannung der reaktiven Last auch einen Strom durch die resistive Last. Die Induktionsspannung wird hierdurch in ihrer Amplitude begrenzt und die Stromaufnahme aus dem Versorgungsnetz verringert.

Über den Leistungsfaktorregler PFC werden die drei Basisalgorithmen Akquisition, Analyse und Aktion realisiert. Als Variablen werden die ausgangsseitigen Spannungsabfälle auf den Netzphasen L1, L2 und L3 gemessen, gespeichert, und die Phasenspitzenströme abgeleitet. Die Werte werden zur Laufzeit durch den Vergleich mit fest abgespeicherten Systemparametern analysiert. In einer nachfolgenden Aktionsphase werden logische Entscheidungen getroffen und die Kondensatorkaskaden KK über die elektronischen Lastschalter ELS für einen optimalen Betrieb eingestellt. Ein kompletter Programmzyklus läuft innerhalb der Latenzzeit von ca. 440 µs ab. Da die aktive Tatzeit für die elektronischen Lastschalter ELS programmintern auf 80 µs eingestellt ist, ergibt sich somit ein Taktzyklus von 520 µs respektive einer Taktfrequenz von 1.920 Hz. Dies bedeutet, dass die Netzphasen L1, L2, L3 jeweils 640 x pro Sekunde auf Veränderungen untersucht werden.

Die notwendige Sicherheit im Dauerbetrieb innerhalb einer komplexen Lastumgebung ist durch eine aufwendige Fehlerschutzschaltung FSC gewährleistet. Dieser fallen drei unterschiedliche Aufgaben zu. Um eine unterbrechungsfreie Stromversorgung der Verbraucher für den Fall einer Störung des Leistungsfaktorreglers PFC in Folge innerer oder äußerer Einflüsse sicherzustellen, erfolgt eine automatische Umgehung der Kondensatorkaskade, d. h. des Leistungsteils der Schaltungsanordnung mittels eines Bypasses BPS zur Beseitigung der Störung. Durch den Bypass BPS wird die Kondensatorkaskade KK überbrückt.

Ferner erkennt die Fehlerschutzschaltung FSC schädliche Induktionsspannungen durch kontinuierliche Überwachung der ausgangsseitigen Phasenspannungen UAL1, UAL2, UAL3 und klemmt bzw. begrenzt diese auf einen Maximalwert von UA = 245 V [RMS]. Hierzu wird oberhalb der Sollspannung der Bypass BPS für einen fest vorgegebenen Zeitraum aktiviert und die Überspannung abgeleitet.

Da die Leistungsbandbreite der Schaltungsanordnung PCP von der Kapazität der Kondensatoren GK, SK1 ...SKn in der Kondensatorkaskade KK abhängt und diese fertigungstechnischen Beschränkungen unterworfen sind, wird bei Erreichen einer unteren Bandgrenze (maximal zulässiger Strom) der Bypass BYP durch den Überstrom aktiviert und so die abgesicherte Anschlussleistung der Gesamtinstallation vollständig ausgenutzt. Die abgesicherte Anschlussleistung ist größer als die Leistungsbandbreite innerhalb derer eine Regelung möglich ist. Die Anschlussleistung ist abhängig vom Leitungsquerschnitt der Bypass-Verdrahtung und der max. Schaltleistung des elektronischen Lastschalters ELS/K3. Im vorliegenden Fall sind die Geräte für eine Absicherung mit 3x63A ausgelegt.

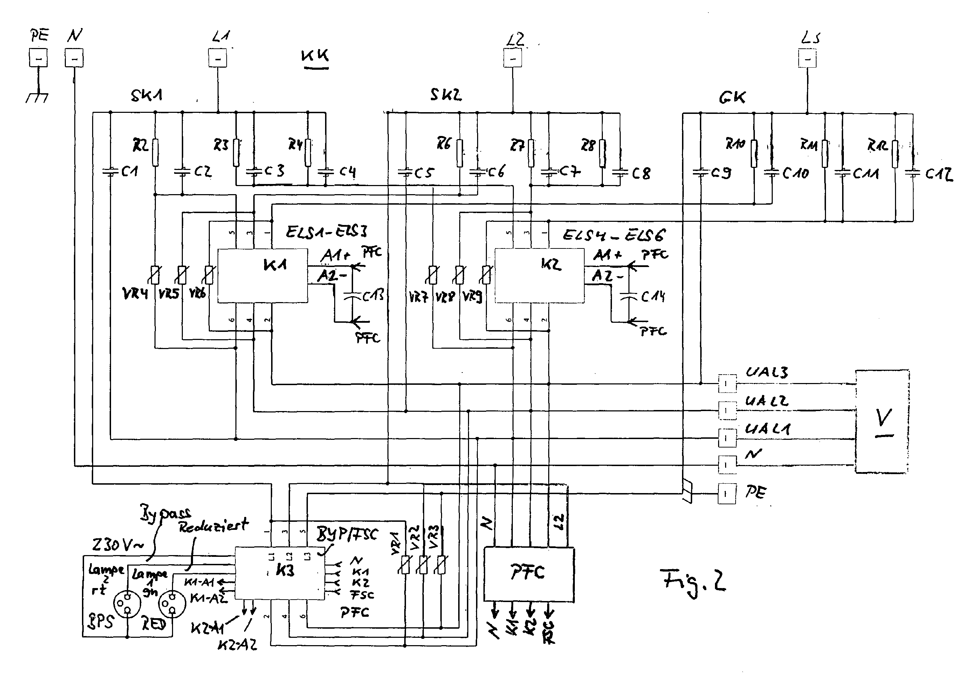

Fig. 2 zeigt ebenfalls in schematischer Ansicht die Kondensatorkaskade KK und deren Verschaltung mit dem Leistungsfaktorregler PFC, der Fehlerschutzschaltung FSC sowie dem Verbraucher V. Die Netzphasen L1, L2, L3 sind jeweils mit Eingängen von Kondensatoren C1, C2, C3, C4 bzw. C5, C6, C7, C8 bzw. C9,. C10, C11, C12 verbunden. Parallel zu den Kondensatoren C2 - C12 sind jeweils Entladewiderstände R2 - R12 geschaltet. Die Ausgänge der Kondensatoren C1, C5, C9 sind unmittelbar mit dem Ausgang L1, L2, L3 und somit mit dem Verbraucher V verbunden. Die Ausgänge der Kondensatoren C2, C6, C10 sind mit Eingängen der elektronischen Leistungsschalter ELS1 - ELS 3 verbunden, deren Ausgänge mit den Ausgängen L1, ELS1 - ELS 3 verbunden, deren Ausgänge mit den Ausgängen L1, L2, L3 verbunden sind. Parallel zu den elektronischen Leistungsschaltern ELS 1 - ELS 3 sind Schutzschaltungen VR4, VR5, VR6 geschaltet. Die Leistungsschalter ELS1 - ELS3 sind in dem elektronischen Lastrelais K1 zusammengefasst.

Die Kondensatoren C3, C4; C7, C8; C11, C12 sind mit Eingängen von elektronischen Leistungsschaltern ELS4 - ELS 6 verbunden, deren Ausgänge ebenfalls mit den Ausgängen L1, L2, L3 verbunden sind. Parallel zu den elektronischen Leistungsschaltern ELS4, ELS6 sind Schutzschaltungen VR7, VR8, VR9 geschaltet. Die Leistungsschalter ELS4 - ELS6 sind in dem elektronischen Lastrelais K2 zusammengefasst.

Zur Erfassung der Phasenausgangsspannung UAL1, UAL2, UAL3 ist der Leistungsfaktorregler PFC mit den zwischen Kondensatorkaskade KK und Verbraucher V liegenden Ausgängen AL1, AL2, AL3 verbunden. Ferner ist der Leistungsfaktorregler PFC noch mit dem Neutralleiter N und der Netzphase L2 unmittelbar verbunden.

Zur Realisierung des Bypasses BYP ist ein Relais K3 vorgesehen, welches eingangsseitig unmittelbar mit den Eingangsnetzphasen L1, L2, L3 und ausgangsseitig mit den Ausgangsnetzphasen L1, L2, L3 verbunden ist. Parallel zu den Kontakten des Bypassrelais K3 sind ebenfalls wieder Schutzschaltungen VR1, VR2, VR3 angeordnet. Die Relais K1, K2 werden über den Leistungsfaktorregler PFC unter Zwischenschaltung der Fehlerschutzschaltung FSC angesteuert. Das Bypassrelais K3 wird durch die Fehlerschutzschaltung FSC angesteuert.

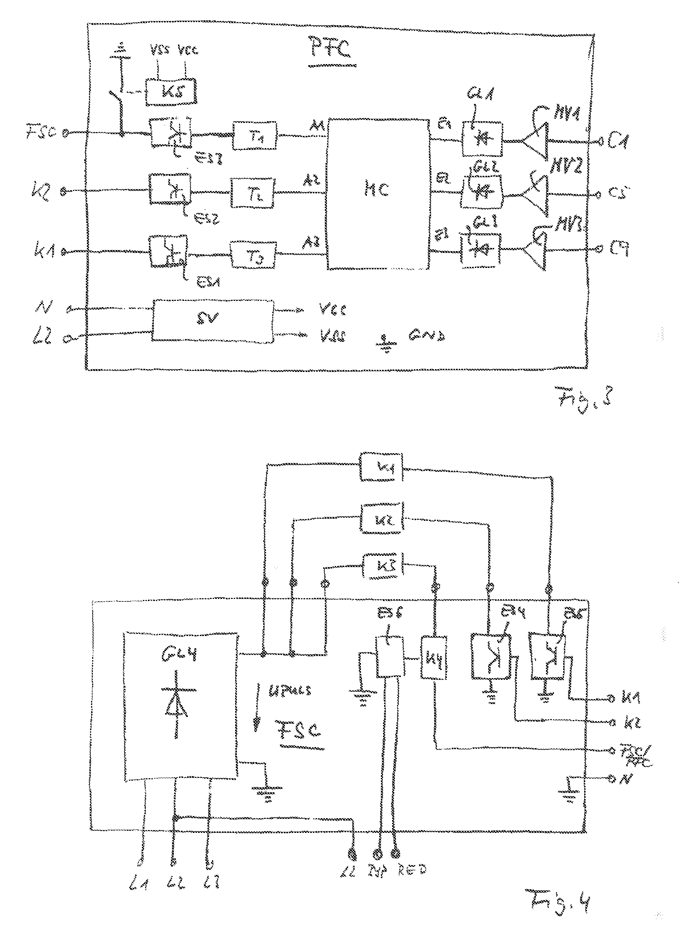

Ein Blockschaltbild des Leistungsfaktorreglers PFC ist in Fig. 3 dargestellt. Dieser umfasst eingangsseitig Messverstärker MV1, MV2, MV3, deren Ausgänge mit Gleichrichtern GL1, GL2, GL3 verbunden sind, die wiederum mit Eingängen E1, E2, E3 eines Mikrocontrollers MC verbunden sind. In dem Mikrocontroller werden die Phasenspannungen UAL1, UAL2, UAL3 erfasst, gespeichert und Phasenspitzenströme errechnet. Der Mikrocontroller MC erzeugt Ansteuersignale für die Relais K1, K2, welche jeweils über Zeitglieder T2, T3 sowie elektrische Schalter ES2, ES3 an die Relais K1, K2 geleitet werden. Über einen Ausgang A1 und ein Zeitglied T1 wird ein elektronischer Schalter ES 1 angesteuert, über den das Bypassrelais K3 aktiviert werden kann.

Das Relais K5 realisiert den Schutz gegen Ausfall oder Störung des PFC, da es die bipolare Betriebsspannung überwacht. Bei Ausfall oder Abfall einer Teilspannung fällt das Relais ab und aktiviert über seinen Ruhekontakt die Bypass-Schaltung FSC.

Der Leistungsfaktorregler PFC ist mit einer eigenen Spannungsversorgung SV versehen, die eingangsseitig mit der Netzphase L2 und dem Neutralleiter N verbunden ist. Ausgangsseitig werden die Versorgungsspannungen VCC für die elektronischen Schalter ES2, ES3, die Timer T1, T2, T3, den Mikrocomputer, sowie die Messverstärker MV1, MV2, MV3 bereitgestellt.

Die Fehlerschutzschaltung FSC ist schematisch in Fig. 4 dargestellt. Diese umfasst einen vorzugsweise dreiphasigen Gleichrichter GF4, der eingangsseitig mit den Netzphasen L1, L2, L3 verbunden ist. Ausgangsseitig wird eine gesiebte Gleichspannung Ub= als Versorgungsspannung für die Relais K1, K2, K3 zur Verfügung gestellt. Die Relais K1, K2 werden über elektronische Schalter ES4, ES5, welche über die elektronischen Schalter ES2, ES3 des Leistungsfaktorreglers PFC angesteuert werden, mit Masse verbunden. Die Ansteuerung des Relais K3 erfolgt über den elektronischen Schalter ES3 des Leistungsfaktorreglers PFC, wobei in Reihe zu dem Relais K3 ein Relais K4 geschaltet ist, über den ein Schaltelement ES6 betätigbar ist, um ein Anzeigeelemente LAMP1 für die Betriebsart "Bypass" und ein Anzeigeelement LAMP2 für die Betriebsart "Reduziert" anzusteuern.

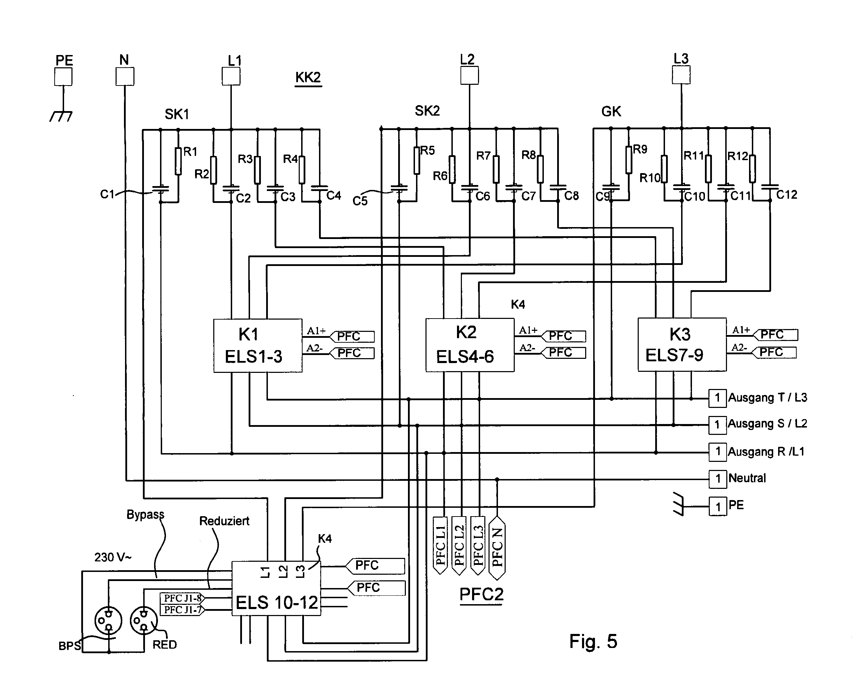

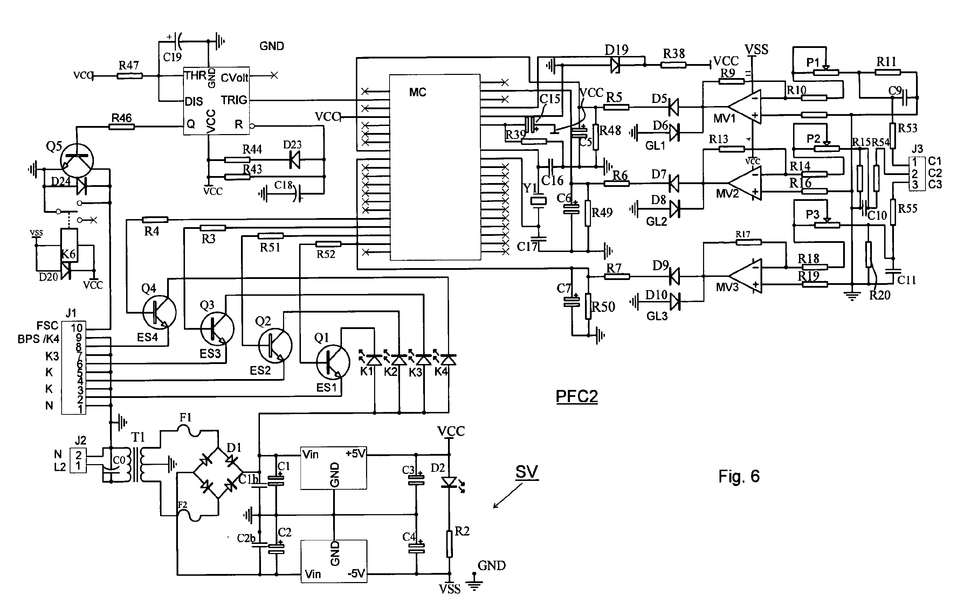

Fig. 5 zeigt in schematischer Ansicht eine weitere Ausführungsform einer Kondensatorkaskade KK2 und deren Verschaltung mit einem Leistungsfaktorregler PFC2 gemäß Fig. 6 sowie einer Fehlerschutzschaltung FSC2 und Bypass-Schaltung BPS2. Die Funktion der Kondensatorkaskade KK2 entspricht im Wesentlichen der Funktion der mit Bezug zu Fig. 2 beschriebenen Kondensatorkaskade KK.

Die Kondensatorkaskade KK2 unterscheidet sich von der in Fig. 2 dargestellten Kondensatorkaskade KK dadurch, dass die Grundkapazität bestehend aus den Kondensatoren C9, C10, C11, C12 ebenfalls über elektronische Leistungsschalter ELS7 - ELS9 zuschaltbar ist. Dadurch ergibt sich eine Leistungsanpassung nach einem Schaltmuster 2^{0..3} über acht Stufen, wobei die Kapazitätssteigerung einen linearen Verlauf aufweisen kann. Das Schaltmuster kann den Kaskadenschaltern, d. h. den elektronischen Leistungsschaltern ELS1 - ELS9 als Pulsmodulation zugeführt werden.

Fig. 6 zeigt eine weitere Ausführungsform eines Leistungsfaktorreglers PFC2, dessen Grundfunktion bereits mit Bezug zu Fig. 3 erläutert wurde. Ergänzend ist ein elektronischer Schalter ES3 zur Ansteuerung der elektronischen Leistungsschalter ELS7 - ELS9 vorgesehen.

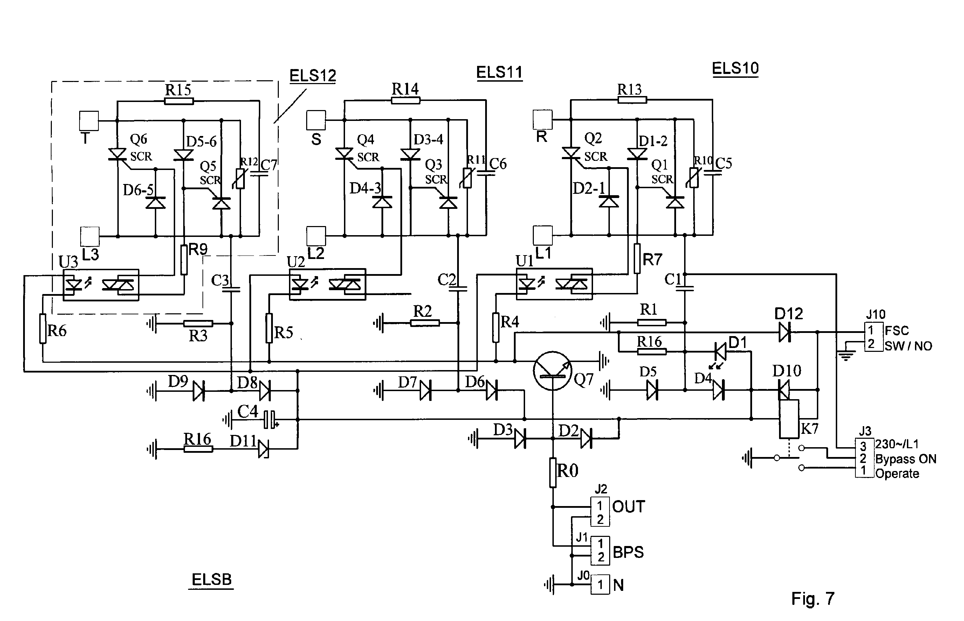

Ein schematischer Aufbau des Bypass-Relais K3 bzw. K4 gemäß Fig. 5 ist in Fig. 7 dargestellt.

Einen entsprechenden Aufbau weisen auch die Relais K1, K2 und K3 der Kondensatorkaskade KK, KK2 auf.

Die Schaltungsanordnung gemäß Fig. 7 soll im Folgenden als elektronsicher Lastschalter ELSB bezeichnet werden, durch den das Bypass-Relais K3 gemäß Fig. 2 sowie K4 gemäß Fig. 5 realisiert wird.

Der elektronische Lastschalter ELSB weist einen Eingang BPS auf, der über einen Widerstand R0 mit der Basis eines Transistors Q7 verbunden ist. Der Kollektor des Transistors Q7 ist jeweils mit einer Kathode einer Ansteuer-LED eines optisch ansteuerbaren Triacs U1, U2, U3 verbunden, während die Anoden der Ansteuerdioden mit einer Spannungsversorgung, bestehend aus einem Kondensator C4 und einer dazu parallel liegenden Reihenschaltung aus Z-Diode D11 und Widerstand R16 angeschlossen sind. Ein leistungsseitiger Ausgangskreis der optischen Triacs U1, U2, U3 ist jeweils mit einem der elektronischen Lastschalter, im vorliegenden Beispiel ELS10, ELS11, ELS 12, verbunden.

Die Lastschalter ELS10, ELS 11, ELS 12 weisen jeweils in Antiparallelschaltung zwei Triacs Q1, Q2; Q3, Q4; Q5, Q6 auf, über die die Eingänge L1, L2, L3 mit Ausgängen R, S, T verbindbar sind. Parallel zu Gate-Kathoden-Übergängen sind jeweils Dioden D1-2, D2-1; D3-4, D4-3; D5-6, D6-5 geschaltet, wobei die Gate-Anschlüsse der Thyristoren Q1, Q3, Q5 über jeweils einen Widerstand R7, R8, R9 mit einem ersten Anschluss des Opto-Triacs U1, U2, U3 verbunden sind. Ein zweiter Anschluss der Opto-Triacs U1, U2, U3 ist mit dem Gate-Anschluss jeweils des Thyristors Q2, Q4, Q6 verbunden.

Dadurch wird ein autokommutierender Vollwellenschalter im stimulierten Gegentakt-Antiparallelbetrieb realisiert.

Die Bauelemente C5, R13 sowie R10; R14, C6, R11 sowie R15, C7, R12 sind Schutzbeschaltungen und entsprechen dem Stand der Technik.

Die elektronischen Lastschalter ELS10, ELS 11, ELS 12 sind jeweils über kapazitive Spannungsteiler C1, R1; C2, R2; C3, R3, mit Gleichrichtern D4, D5; D6, D7; D8, D9 verbunden. Die Ausgänge der Gleichrichter sind mit der Spannungsversorgung C4, D11, R16, der Opto-Triacs U1, U2, U3 verbunden.

Über den Eingang BPS erfolgt eine Impuls-Ansteuerung des Transistors Q7, wodurch die Ansteuer-LED's der Opto-Triacs U1, U2, U3 angesteuert werden. Die Zündimpulse haben eine Breite von ca. 80 µs. Durch die Triacs U1, U2, U3 erfolgt jeweils eine Gegentaktansteuerung der antiparallel geschalteten Thyristoren Q1, Q2; Q3, Q4; Q5, Q6.

Die Ansteuerung der elektronischen Leistungsschalter ELS10 - ELS12 sowie deren Aufbau weist einen eigenerfinderischen Charakter auf. Die elektronischen Leistungsschalter ELS10 - ELS 12 zeichnen sich durch besonders schnelle Schaltzeiten aus, die u. a. durch die Ansteuerung mittels der Opto-Triacs U1 - U3 erreicht werden. Hier ist insbesondere die Spannungsversorgung bestehend aus Reihenschaltung der Z-Diode D11 mit dem Widerstand R16 zu erwähnen, wobei durch den Spannungsabfall des Widerstands R16 das Potenzial der Z-Diode D11 von zum Beispiel 5,6 V auf 6,5 V angehoben wird. Dadurch wird ein hoher Zündimpulsstrom erreicht, wodurch ein schnelles Schalten gewährleistet ist.

Der bisher beschriebene Schaltungsaufbau findet sich ebenfalls in den Relais K1, d. h. den elektronischen Leistungsschaltern ELS1-3, dem Relais K2, d. h. den elektronischen Leistungsschaltern ELS4-6 sowie dem Relais K3, elektronische Leistungsschalter ELS7 - 9 wieder.

Durch die Bypass-Funktion werden hohe Spannungen an dem Verbraucher, welche im Verbraucherkreis durch eine Serienschaltung der Kondensatoren GK, SK1 bzw. SK2 mit induktiven Lasten entstehen können, auf eine Maximalspannung von beispielsweise 241 V begrenzt, wobei Überspannungen zurück ins Netz gespeist werden.

Zu der Ansteuerung der elektronischen Leistungsschalter ELS1-12 ist noch anzumerken, dass diese in der Anstiegsphase einer sinusförmigen Spannung, etwa 5 ms nach dem Nulldurchgang erfolgt, so dass ein verlustarmes Schalten möglich ist mit der Folge, dass die Verlustleistung der Thyristoren Q1 - Q6 reduziert ist.

Ergänzend zu der zuvor beschriebenen Bypass-Funktion der elektronischen Lastschaltung ELSB ist gemäß Fig. 7 noch eine sogenannte Fehlerschutzschaltung FSC2 realisiert, deren Grundfunktion bereits mit Bezug zu Fig. 4 beschrieben wurde.

In einem Fehlerfall, beispielsweise Ausfall der Versorgungsspannung VSS, fällt das Relais K6 gemäß Fig. 6, welches sich im stromlosen Zustand in geschlossener Stellung befindet, ab. Hierdurch wird ein Anschluss 5 eines Relais K7 gemäß Fig. 7 über einen Transistor Q5 gemäß Fig. 6 an Massepotenzial gelegt. Der Zustand des Relais K7 wird über Anzeigemittel "Bypass-on/230/L1" angezeigt. Ferner wird die Diode D12 gemäß Fig. 7, deren Anode jeweils mit Kathoden der Ansteuer-LED's der Opto-Triacs U1, U2, U3 verbunden ist, an Massepotenzial gelegt, so dass die elektronischen Leistungsschalter ELS10 - ELS12 über die Opto-Triacs U1 - U3 in den sicheren Zustand gesteuert werden.

Zusammenfassend ist anzumerken, dass dem Benutzer durch die Schaltungsanordnung PCP eine Vorrichtung zur Verbrauchskostenoptimierung im Niederspannungs-Wechselstromnetz zur Verfügung gestellt wird. Der Benutzer der Schaltungsanordnung PCP kann durch die Nutzung innerhalb seiner Elektroinstallation im Privat- und/oder Gewerbereich nutzen in Form einer signifikanten Reduktion der an Energieversorgungsunternehmen zu zahlende Entgelte für die Abnahme elektrischen Stroms erreichen. Diese Einsparungen können in Abhängigkeit von der momentanen Belastung des verbraucherseitigen Netzes bis zu 41 % betragen. Des Weiteren kann die Schaltungsanordnung durch die reale Reduktion des Stromverbrauchs von 16 % bis maximal 27 % im Rahmen des Toleranzbandes der DIN IEC 60038 einen Beitrag zur Vermeidung von CO₂-Emissione bei der Erzeugung elektrischen Stroms aus fossilen Quellen und damit zum Klimaschutz beitragen.

Da die Gesetze der Thermodynamik auch in der Elektrophysik uneingeschränkt Gültigkeit besitzen, ist eine Reduktion des Energieverbrauchs und der Kosten für den Verbrauch ohne weitergehende Beeinträchtigung der Funktionalitäten nur durch Verschiebung von Leistungsanteilen sowie der Nutzung von systemimmanenten Ressourcen - welche bisher nur den Stromerzeugern zu Gute kamen - und der legalen Nutzung von Unzulänglichkeiten in den Messverfahren zu realisieren.

Die Funktionalität der Schaltungsanordnung PCP beruht auf einem tripodischen System elektrophysikalischer Effekte kombiniert mit mathematisch/logischen Algorithmen zur Analyse, Überwachung und Steuerung.

Die notwendige Sicherheit im Dauerbetrieb innerhalb einer komplexen Lastumgebung ist durch die aufwendige Fehlerschutzschaltung FSC gewährleistet.

Die Schaltungsordnungen sind für die Verwendung im Vierleiter-/Drei-Phasendrehstromnetz WSN mit 230/240 V gegen Mittelpunktleiter N bzw. 400 V Außenleiter-Außenleiterspannung konzipiert und in der Leistung skalierbar.

Die zuvor beschriebene Schaltungsanordnung PCP kann modular aufgebaut werden und besteht dann aus einer Mastereinheit und bis zu vier Slave -Einheiten mit Leistungsbandbreiten von jeweils 20/40 KVA, so dass sich serienmäßig Installationen von 100KVA im Sternbetrieb bzw. 200 KVA im Dreiecksbetrieb realisieren lassen.

## Patentansprüche

1. Verfahren zur Verbrauchskostenoptimierung im Niederspannungs-Wechselstromnetz,
**dadurch gekennzeichnet,**
**dass** ein Verbraucher (V) in Reihenschaltung mit einer kapazitiven Stromquelle (PCP) mit addativem Innenwiderstand an einem Wechselstromnetz (WSN) betrieben wird, wobei ein Leistungsfaktor λ der **dadurch** entstehenden Reihenschaltung durch einen Leistungsfaktorregler (PFC) derart eingestellt wird, dass die aus dem Wechselstromnetz (WSN) entnommene Wirkleistung minimiert wird.

2. Verfahren nach Anspruch 1,
**dadurch gekennzeichnet,**
**dass** eine vorzugsweise dreiphasige galvanische Trennung des Versorgungsnetzes vom Verbrauchernetz durch vorzugsweise drei vorzugsweise digital gesteuerte Kapazitätskaskaden durchgeführt wird.

3. Verfahren nach Anspruch 1oder 2,
**dadurch gekennzeichnet,**
**dass** die Impedanz, als Innenwiderstand der virtuellen kapazitiven Stormquelle (TCP) durch einen Grundlastkondensator und dazu parallel geschaltete Phasenschieberkondensatoren lastabhängig geändert wird und so für das Versorgungsnetz als Konstante Spannungsquelle eine komplexe Last mit einem Phasenwinkel zwischen Strom und Spannung bildet.

4. Verfahren nach zumindest einem der vorhergehenden Ansprüche,
**dadurch gekennzeichnet,**
**dass** die Kondensatoren mit schnellen, autokommutierenden Halbleiterschaltern mit optischer Potenzialtrennung zwischen Steuer- und Leistungskreis zu- und abgeschaltet werden.

5. Verfahren nach zumindest einem der vorhergehenden Ansprüche,
**dadurch gekennzeichnet,**
**dass** vorzugsweise zwei Leistungsthyristoren über zwei Kommutierungsdioden und einen optisch isolierten Triac in einem stimulierten im Gegentakt-Antiparallelbetrieb als Vollwellenschalter ohne Verlustwinkel betrieben werden.

6. Verfahren nach zumindest einem der vorhergehenden Ansprüche,
**dadurch gekennzeichnet,**
**dass** eine Kapazität der kapazitiven Stromquelle (PCP) **dadurch** variiert wird, dass zu einer mit dem Verbraucher (V) in Reihe liegenden Grundkapazität über elektronische Leistungsschalter Stützkapazitäten parallel geschaltet werden, wobei die Ansteuerung der Stützkapazitäten über den Leistungsfaktorregler erfolgt.

7. Verfahren nach zumindest einem der vorhergehenden Ansprüche,
**dadurch gekennzeichnet,**
**dass** der Leistungsfaktorregler (PFC) Spannungsabfälle auf den ausgangsseitigen Netzphasen erfasst, speichert und aus diesen messwerten Spitzenströme errechnet, wobei vorzugsweise die Werte zur Laufzeit durch den Vergleich mit fest abgespeicherten Systemparametern analysiert werden.

8. Verfahren nach zumindest einem der vorhergehenden Ansprüche,
**dadurch gekennzeichnet,**
**dass** schädliche Induktionsspannungen durch kontinuierliche Überwachung der ausgangsseitigen Phasenspannungen erkannt werden und dass im Falle von schädlichen Induktionsspannungen die Phasenspannungen auf einen Maximalwert von 245 V[RMS] geklemmt und begrenzt werden.

9. Schaltungsanordnung (PCP) zur Optimierung des Energieverbrauchs eines Verbrauchers (V) an einem Wechselstromnetz (WSN),
**dadurch gekennzeichnet,**
**dass** die Schaltungsanordnung (PCP) als kapazitive Stromquelle mit adaptivem Innenwiderstand ausgebildet ist, welche in Reihenschaltung mit dem Verbraucher (V) an dem Wechselstromnetz (WSN) angeschlossen ist und einen Reihenresonanzkreis bildet.

10. Schaltungsanordnung nach Anspruch 9,
**dadurch gekennzeichnet,**
**dass** die Schaltungsanordnung (PCP) umfasst:
eine Kondensatorkaskade (KK), mit einer mit dem Verbraucher (V) in Reihe liegenden
Grundkapazität (GK) sowie zumindest einer Stützkapazität (SK1 - SKn), welche mittels eines Schaltelementes (ELS1 - ELSn) parallel zu der Grundkapazität (GK) schaltbar ist,
einen Leistungsfaktorregler (PFC), welcher zur Erfassung einer Netzspannung (UNETZ) mit zumindest einer Netzphase (L1, L2, L3) und zur Erfassung zumindest einer Ausgangsspannung (UAL1, UAL2, UAL3) mit zumindest einer Ausgangsphase (L1, L2, L3) verbunden ist, wobei die Ausgangsspannungen gemessen und gespeichert werden und daraus Phasenspitzenströme abgeleitet werden, wobei die gemessenen und berechneten Werte zur Laufzeit durch den Vergleich mit vorgegebenen Systemparametern analysiert werden und wobei Steuersignale für das zumindest eine Schaltelement (ELS 1 - ELSn) zur optimalen Regelung des Leistungsfaktors (λ) erzeugt werden.

11. Schaltungsanordnung nach Anspruch 9 oder 10,
**dadurch gekennzeichnet,**
**dass** der Leistungsfaktorregler (PFC) Messverstärker (MV1, MV2, MV3) zur Erfassung der Phasenausgangsspannungen (UAL1, UAL2, UAL3) aufweist, dass die Messverstärker (MV1, MV2, MV3) mit Eingängen (E1, E2, E3) eines Mikro-controllers (MC) verbunden sind und dass Relais (K1, K2) zur Ansteuerung der Schaltelemente (ELS 1 - ELSn) jeweils über elektrische Schaltelemente
(ES1, ES4; ES2, ES5) und ein Zeitglied (T2, T3) mit einem Ausgang (A2, A3) des Mikro-controllers (MC) verbunden sind.

12. Schaltungsanordnung nach einem der Ansprüche 9 bis 11,
**dadurch gekennzeichnet,**
**dass** die Schaltungsanordnung (PCP) eine Fehlerschutzschaltung (FSC) mit einer Bypass-Schaltung /BYP) aufweist, wobei mittels eines Bypass-Relais (K3) die Kondensatorkaskade (KK) überbrückbar ist, und/oder dass das Bypass-Relais (K3) über einen Timer (T1) ansteuerbar ist.

13. Schaltungsanordnung nach zumindest einem der Ansprüche 9 bis 12,
**dadurch gekennzeichnet,**
**dass** ein Ausgang (FSC) des Leistungsfaktorreglers (PFC) zur Ansteuerung des Bypass-Relais (K3) über einen Schaltkontakt gegen Masse schaltbar ist und/oder dass der Schaltkontakt über ein Relais (K5) ansteuerbar ist, welches mit einem Anschluss an Versorgungsspannung (VSS) und mit dem anderen Anschluss an Versorgungsspannung (VCC) liegt.

14. Schaltungsanordnung nach zumindest einem der Ansprüche 9 bis 13,
**dadurch gekennzeichnet,**
**dass** die Phasenausgangsspannungen (UAL1, UAL2, UAL3) über eine Reihenschaltung aus Messverstärker (MV1, MV2, MV3) und jeweils einem Gleichrichter (GL1, GL2, GL3) mit Eingängen (E1, E2, E3) des Mikrocontrollers (MC) verbunden sind.

15. Schaltungsanordnung nach zumindest einem der Ansprüche 9 bis 14,
**dadurch gekennzeichnet,**
**dass** der Leistungsfaktorregler (PFC) eine eigenständige Stromversorgung (SV) aufweist, der eingangsseitig mit der Netzphase (L2) und dem Neutralleiter (N) verbunden ist und ausgangsseitig Versorgungsspannungen (VCC, VSS) zur Verfügung stellt.

16. Schaltungsanordnung nach zumindest einem Ansprüche 9 bis 15,
**dadurch gekennzeichnet,**
**dass** die Fehlerschutzschaltung (FSC) einen Gleichrichter (GL4) aufweist, vorzugsweise Dreiphasengleichrichter, der eingangsseitig mit den Netzphasen (L1, L2, L3) verbunden und ausgangsseitig die gesiebte Gleichspannung (Ub) zur Versorgung der Relais (K1, K2, K3) bereitstellt und/oder dass in Reihe zu dem Relais (K3) eine Relaisspule (K4) geschaltet ist, über die ein Wechselschalter (ES6) ansteuerbar ist, um den Zustand des Relais (K3) anzuzeigen.
